Europäisches Patentamt

European Patent Office

Office européen des brevets

(19)

(11) Veröffentlichungsnummer : **0 001 241**
**B1**

(12) **EUROPÄISCHE PATENTSCHRIFT**

(45) Veröffentlichungstag der Patentschrift :
06.05.81

(21) Anmeldenummer : 78100842.0

(22) Anmeldetag : 07.09.78

(51) Int. Cl.³ : **C 08 L 77/00**, C 08 J 5/18 //
(C08L77/00, 23/04, 31/02)

(54) Schlagzähe Polyamidmasse und deren Verwendung in Formkörpern.

(30) Priorität : 20.09.77 DE 2742177

(43) Veröffentlichungstag der Anmeldung :
04.04.79 (Patentblatt 79/07)

(45) Bekanntmachung des Hinweises auf die Patenterteilung : 06.05.81 Patentblatt 81/18

(84) Benannte Vertragsstaaten :
DE FR GB NL

(56) Entgegenhaltungen :
US - A - 3 240 734

CHEMICAL ABSTRACTS, Vol. 80, Nr. 10,
11-03-1974, Nr. 49090v,
Seite 50 « Polyamide blend fibers with good
water absorption »

(73) Patentinhaber : BAYER AG
Zentralbereich Patente, Marken und Lizenzen
D-5090 Leverkusen 1, Bayerwerk (DE)

(72) Erfinder : Meyer, Rolf-Volker, Dr.
Bodelschwinghstrasse 12
D-4150 Krefeld (DE)
Erfinder : Dhein, Rolf, Dr.
Deswatinesstrasse 30
D-4150 Krefeld (DE)
Erfinder : Fahnler, Friedrich
Wimmersweg 60
D-4150 Krefeld (DE)

## Schlagzähe Polyamidmasse und deren Verwendung in Formkörpern

Gegenstand der Erfindung sind Polymerlegierungen aus Polyamiden und amidgruppenhaltigen olefinischen Copolymerisaten, die eine hohe Zähigkeit bei hervorragender Homogenität aufweisen.

Die mechanischen Eigenschaften von Polymeren hängen häufig von der Art ihrer Vorbehandlung ab. So ist die Schlagzähigkeit von Formkörpern aus Polyamidkunststoffen erheblich vom Wassergehalt der Formkörper abhängig.

In wasserfreiem Zustand sind besonders die aus leichtfließenden, vorzugsweise hochkristallinen Polyamiden mit mittlerem Molekulargewicht hergestellten Formkörper relativ empfindlich gegen Schlagbeanspruchung. Es besteht daher ein Bedarf nach rasch verarbeitbaren, leichtfließenden Polyamidkunststoffen, aus denen sich insbesondere Formkörper herstellen lassen, die in trockenem Zustand eine erhöhte Schlagzähigkeit besitzen. Besonders sind solche Polyamide von Interesse, die hohe Zugfestigkeit, hohe Wärmestandfestigkeit, gute Beständigkeit gegen Lösungsmittel und leichte Verarbeitbarkeit kombiniert mit einer hohen Schlagzähigkeit und Flexibilität aufweisen.

Es sind bereits verschiedene Verfahren zur Erhöhung der Zähigkeit und Flexibilität von Polyamiden bekannt. So z.B. das Einarbeiten von niedermolekularen Weichmachern in Polyamide, das aber aus mehreren Gründen keine zufriedenstellende Lösung des Problems bringt. Die meisten der für Kunststoffe geeigneten Weichmacher sind mit Polyamiden nicht genügend verträglich und entmischen sich beim Verarbeiten bzw. neigen zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid zeigen zwar eine starke Weichmacherwirkung, sie können jedoch erst nach der Herstellung von Polyamidformkörpern in diese eingearbeitet werden, weil sonst bei der Verarbeitung des vorbehandelten Polyamidgranulats wegen der relativ niederen Siedepunkte dieser Weichmacher blasenhaltige Formkörper entstehen würden.

Dieses Verfahren ist zudem im allgemeinen zeit- und kosten- aufwendig. Außerdem ist es für die Herstellung dickwandiger Formteile wegen der unregelmäßigen Verteilung des Weichmachers im Formteil unbrauchbar.

Obendrein entweichen diese Weichmacher wegen ihres relativ hohen Dampfdruckes teilweise wieder aus den Polyamidformkörpern.

Als besonders nachteilig erweisen sich diese Maßnahmen bei Versuchen, das so vorbehandelte Polyamidgranulat zu qualitativ hochwertigen Folien zu verarbeiten.

Es wurde auch versucht, die Schlagzähigkeit von Polyamiden durch Zumischen von polymeren Stoffen wie Polyäthylen und Copolymerisaten aus Vinylacetat und Äthylen (DAS 1 138 922) zu verbessern. Obwohl bei der Herstellung derartiger Mischungen ein sehr intensives Kneten erforderlich ist, treten Entmischungen beim Weiterverarbeiten z.B. im Spritzguß und besonders bei der Folienherstellung wieder auf.

Daraus hergestellte Formkörper zeigen daher Neigung zum Weißbruch. Bei der Folienherstellung wird beobachtet, daß selbst bei Anwendung hoher Betriebsdrucke eine rasche Entmischung unmittelbar nach dem Austritt aus der Düse einsetzt.

Weiterhin wurden zur Erhöhung der Flexibilität von Polyamiden in spritzfrischem Zustand Copolymerisate aus Äthylen und (Meth)acrylsäureester eingesetzt.

So wird gemäß der Lehre der Patentschriften US-PS 3 742 916 und DT-PS 1 669 702 durch Einsatz von Copolymerisaten aus Äthylen und (Meth)acrylsäureestern eine gewisse Verbesserung erzielt. Die Kerbschlagzähigkeit im spritzfrischen Zustand ist noch unbefriedigend, ebenso wie die merkliche Entmischungstendenz.

Die Flexibilität von Polyamiden kann auch durch Einmischen von saure Gruppen enthaltenden Polyäthylenen, wie z.B. Copolymerisaten aus Äthylen und ungesättigten Säuren oder mit ungesättigten Säuren gepfropftem Polyäthylen, erhöht werden. Derartige Mischungen sind zwar feindisperser und zeigen bei Beanspruchung einen weit geringeren Weißbruch als die oben beschriebenen Mischungen, sie besitzen jedoch, abgesehen von der etwas verbesserten Zähigkeit und Flexibilität, erheblich schlechtere mechanische Eigenschaften, wie z.B. E-Modul, Zugfestigkeit, Härte, Steifigkeit, als die Polyamide selbst.

So wurden z.B. auch Copolymerisate aus Äthylen, (Meth)acrylsäure und (Meth)acrylaten als elastifizierende Komponente Polyamiden zugesetzt (DAS 1 241 606), wobei eine merkliche Verbesserung der Schlagzähigkeit bei guter Homogenität erzielt wird.

Die Herstellung von acrylsäurehaltigen Copolymerisaten ist aber mit beträchtlichen Schwierigkeiten verbunden, die hauptsächlich darauf zurückzuführen sind, daß Acrylsäure ebenso wie ihre Homologen korrodierend wirkt und dabei Schäden an Dosiereinrichtungen und Reaktoren verursacht.

Infolge der freien Carboxylgruppen im olefinischen Copolymeren ist darüber hinaus sowohl bei den Compoundieranlagen als auch in den Spritzgußmaschinen ein durch Korrosion bedingter höherer Verschleiß zu beobachten, der zu Produktionsstörungen führen kann.

Der gleiche Nachteil haftet im Prinzip auch den aus den US-PS 3 845 163 bzw. FR-PS 1 504 113 bekannten Legierungen an, die wegen der zum Teil als Salz vorliegenden (Meth)acrylsäure noch zusätzliche Nachteile aufweisen. So fallen bekanntlich die Werte der Kriechstromfestigkeit bei Anwesenheit von Metallionen so stark ab, daß ein Einsatz der Produkte auf dem Elektrosektor kaum möglich ist.

Darüber hinaus sind die meisten der zur Neutralisation verwendeten Metallionen — z.B. $Zn^{2+}$, $Ba^{2+}$, $Cd^{2+}$, $Hg^{2+}$ — physiologisch bedenklich. So dürften derartige Produkte weder auf dem Sektor der Lebensmittelverpackung noch als Kinderspielzeug eingesetzt werden.

Überraschenderweise wurde nun gefunden, daß man schlagzähe, sehr homogene Polymerlegierungen erhält, die die genannten Nachteile nicht aufweisen, wenn man Polyamide mit amidgruppenhaltigen olefinischen Copolymerisaten nach üblichen Verfahrensweisen compoundiert.

Gegenstand der Erfindung sind daher schlagzähige Polymerlegierungen bestehend aus

1. 70-99 Gew.-%, vorzugsweise 80-95 Gew.-% eines Polyamids und

2. 1-30 Gew.-%, vorzugsweise 5-20 Gew.-% eines olefinischen Copolymerisats mit einem Schmelzpunkt von wenigstens 100 °C, bestehend aus

    a) 65-98 Gew.-%, vorzugsweise 80-96 Gew.-%, eines α-Olefins mit $C_2$-$C_{20}$

    b) 1-15 Gew.-%, vorzugsweise 2-8 Gew.-%, eines Amids einer α,β-ungesättigten Carbonsäure mit $C_3$-$C_5$ und

    c) 1-20 Gew.-%, vorzugsweise 2-15 Gew.-%, eines Alkyl- oder Alkenylesters einer α,β-ungesättigten Carbonsäure mit $C_3$-$C_5$, wobei die Summe aus 1. und 2. bzw. a)-c) jeweils 100 Gew.-% beträgt.

Als Polyamide im Sinne der Erfindung können lineare Polykondensate von Lactamen mit 6-12 Kohlenstoffatomen bzw. übliche Polykondensate aus Diaminen und Dicarbonsäuren, wie 6,6-, 6,8-, 6,9-, 6,10-, 6,12-, 8,8-, 12,12-Polyamid, oder Polykondensate aus aromatischen Dicarbonsäuren wie Isophthalsäure, Terephthalsäure mit Diaminen wie Hexamethylendiaminen, Octamethylendiamin, aus araliphatischen Ausgangsstoffen wie m- oder p-Xylylendiaminen und Adipinsäure, Korksäure, Sebazinsäure, Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden. Vorzugsweise werden Polyamide mit einer relat. Viskosität von mindestens 2,5, besonders bevorzugt von mindestens 3,5 eingesetzt (gemessen an einer 1 %igen Lösung in m-Kresol bei 25 °C). Gleichermaßen können Gemische der genannten Polyamide oder aus den genannten Bausteinen erhältliche Copolyamide Verwendung finden.

Vorzugsweise werden 6-Polyamid und 6,6-Polyamid verwendet.

Zur Herstellung der olefinischen Copolymerisate eignen sich α-Olefine mit $C_2$-$C_{20}$, wie z.B. Äthylen, Propylen, Buten-1, Isobuten, Penten-1, Hexen-1, Decen-1, 4-Methyl-buten-1, 4-Methylpenten-1, Vinylcyclohexan, Styrol, α-Methylstyrol oder mit niedrigen Alkylgruppen substituierte Styrole.

Gemische der genannten Olefine können ebenfalls verwendet werden.

Als Amide werden vorzugsweise Amide von α,β-ungesättigten Säuren mit $C_3$-$C_5$ wie z.B. Methacrylamid oder Acrylamid verwendet.

$C_1$-$C_8$- vorzugsweise $C_1$-$C_4$-Alkyl- bzw. Alkenylester von α,β-ungesättigten Säuren mit $C_3$-$C_5$ wie z.B. Methyl-, Äthyl- oder Butyl(meth)acrylat werden vorzugsweise zur Herstellung der Copolymerisate eingesetzt.

Die Herstellung der olefinischen Copolymerisate erfolgt nach bekannten Methoden, die in der Literatur ausreichend beschrieben sind.

Die Erfindung ist jedoch keineswegs auf Copolymere beschränkt, die durch direkte Copolymerisation von α-Olefinen mit α,β-ungesättigten Comonomeren erhalten sind. Die amidgruppenhaltigen modifizierten Polyolefine können auch durch Pfropfung von z.B. Acrylamid und weiteren zur Pfropfung geeigneten Monomeren auf ein Polyolefingrundmaterial hergestellt sein. Geeignete Verfahren sind z.B. in der deutschen Patentanmeldung P 27 34 105 beschrieben.

Wie die Polyamidkomponente sollten auch die amidgruppenhaltigen olefinischen Copolymerisate vorzugsweise hochmolekulare Materialien sein.

Die Art der amidgruppenhaltigen Olefincopolymerisate, die zusammen mit Polyamiden zur Bildung verträglicher Mischungen mit guten thermoplastischen Eigenschaften verwendet werden können, wird durch die folgenden Beispiele, die keinesfalls erschöpfend sind, erläutert:

Äthylen/Acrylamid/tert.-Butylacrylat-Copolymerisate,

Äthylen/Methacrylamid/tert.-Butylacrylat-Copolymerisate,

Äthylen/Acrylamid/Methylmethacrylat-Copolymerisate,

Äthylen/Acrylamid/Äthylacrylat-Copolymerisate,

Äthylen/Styrol/Acrylamid/Äthylacrylat-Copolymerisate,

Äthylen/Buten-1/Methacrylamid/Äthylacrylat-Copolymerisate,

Propylen/Acrylamid/Äthylacrylat-Copolymerisate,

Buten-1/Acrylamid-Äthylacrylat-Copolymerisate.

Die amidgruppenhaltigen olefin. Copolymerisate sind auch geeignet, wenn sie als zusätzliches Comonomer in geringen Mengen (Meth)acrylsäure eingebaut enthalten.

Bevorzugte Legierungspartner sind olefin. Copolymerisate bestehend aus 80-96 Gew.-Tln. Äthylen, 2-8 Gew.-Tln. des Amids einer α,β-ungesättigten Carbonsäure sowie 2-15 Gew.-Tln. eines $C_1$-$C_8$-Alkylesters einer α,β-ungesättigten Carbonsäure, wobei die Summe der Gewichtsteile jeweils 100 beträgt.

Besonders bevorzugte Legierungspartner sind olefin. Copolymerisate, die Äthylen, Acrylamid und als Esterkomponente Ester der Acrylsäure mit $C_1$-$C_4$-Alkoholen enthalten.

Während sich viele Polymerlegierungen nur durch Spritzgießen, — also bei hohem Druck, der eine Entmischung verhindert — zu praktisch verwendbaren Produkten verarbeiten lassen, ist die Verträglichkeit der erfindungsgemäßen olefin..Copolymerisaten in Legierungen mit Polyamiden überraschenderweise so gut, daß sie sich nach den üblichen technischen Verfahren auch zu homogenen Folien verarbeiten lassen, die in den gebräuchlichsten Schichtdicken von 10-70 μm transparent sind.

Zur Herstellung der erfindungsgemäßen Polymerlegierungen werden die Ausgangskomponenten über dem Schmelzpunkt des verwendeten Polyamids, z.B. bei Temperaturen von 200-320 °C, insbesondere bei 250-290 °C, vermischt.

Vorrichtungen, in denen die erfindungsgemäßen Formmassen hergestellt werden können, sind übliche Schneckenmaschinen. Es sind sowohl Maschinen mit einfachen als auch solche mit Doppelschnecken geeignet. Doppelschneckenextruder werden bevorzugt verwendet.

Es können jedoch auch andere Mischvorrichtungen verwendet werden, die zum Plastifizieren von Kunststoffen geeignet sind.

In die hochelastischen Legierungen können für den Einsatz als thermoplastische Formmassen zusätzlich auch Stabilisatoren, Entformungsmittel, Gleitmittel, Kristallisationsbeschleuniger, Weichmacher, Pigmente, Farbstoffe oder Füllstoffe, wie Glasfasern oder Asbest, eingearbeitet werden. Monofile und sonstige Formkörper aus derartigen Polymerlegierungen zeigen keinen Weißbruch an Bruch- und Schnittstellen sowie keine Entmischung. Sie haben ferner im Vergleich zu Formkörpern aus bekannten Polyamid-Polyolefin-Mischungen eine sehr gute Oberflächenbeschaffenheit. Sie haben weiterhin im Vergleich zu Formkörpern aus Polyamiden eine verminderte Wasseraufnahmefähigkeit und zeigen eine stark erhöhte Kerbschlagzähigkeit im Trockenzustand. Die Compounds eignen sich für die Extruder- und Spritzgußverarbeitung, zur Herstellung von Formkörpern, wie Gehäusen, Platten, Fäden, Bändern, Rohren, sowie zur Herstellung transparenter Folien.

### Beispiel 1

95 Gew.-Tle eines 6-Polyamids mit einer rel. Viskosität von 2,9 und einer nach DIN 53 453 bestimmten Kerbschlagzähigkeit von 2-3 kJ/m$^2$ und 5 Gew.-Tle eines Copolymeren aus 95,5 Gew.-Tln Äthylen, 2,0 Gew.-Tln Acrylamid und 2,5 Gew.-Tln Acrylsäure-tert.-butylester (Fp : ca. 120 °C, Schmelzindex : 7 g/10 min bei 190 °C) werden in einem Mischgerät 5 min gemischt. Die so vorbereitete Komponentenmischung wird in einem Zweiwellenextruder vom Typ ZSK 53 bei 90 U/min und 260 °C verknetet und extrudiert, die Schmelze in ein Wasserbad abgesponnen, granuliert und dann bei 80 °C im Vakuum bis zu einem Wassergehalt von 0,05 Gew.-% getrocknet. Das Produkt hat (bezogen auf den Polyamidanteil) ein rel. Lösungsviskosität, gemessen an einer 1 %igen Lösung in m-Kresol bei 25 °C in einem Ubbelohde-Viskosimeter, von 2,9. Wechselbiegeversuche an frisch gespritzten Probekörpern zeigen sehr gute Homogenität der Polymerlegierung.

Nach DIN 53 453 wird eine Kerbschlagzähigkeit von 6,9 kJ/m$^2$ gemessen.

### Beispiel 2

Beispiel 1 wurde wiederholt mit dem Unterschied, daß als Basispolyamid ein 6-Polyamid mit der rel. Viskosität 4,2 eingesetzt wird (Kerbschlagzähigkeit nach DIN 53 453: 3 - 4 kJ/m$^2$).

Wechselbiegeversuche an frisch gespritzten Probekörpern zeigen sehr gute Homogenität der Polymerlegierung. Nach DIN 53 453 wird eine Kerbschlagzähigkeit von 10,8 kJ/m$^2$ gemessen.

### Beispiel 3

Analog Beispiel 1 werden 90 Gew.-Tle eines 6-Polyamids mit einer rel. Viskosität von 2,9 und 10 Gew.-Tle des in Beispiel 1 verwendeten olefinischen Copolymerisats compoundiert.

Die erhaltene Polymerlegierung zeigt bei Wechselbiegeversuchen an spritzfrischen Probekörpern eine gute Homogenität ; die Kerbschlagzähigkeit nach DIN 53 453 zeigt 9,1 kJ/m$^2$.

### Beispiel 4

Analog Beispiel 1 werden 90 Gew.-Tle eines 6-Polyamids mit einer rel. Viskosität von 4,2 und 10 Gew.-Tle des in Beispiel 1 verwendeten olefinischen Copolymerisats compoundiert.

Die erhaltene Polymerlegierung zeigt bei Wechselbiegeversuchen an spritzfrischen Probekörpern eine gute Homogenität ; die Kerbschlagzähigkeit nach DIN 53 453 beträgt 17,5 kJ/m$^2$.

### Beispiele 5 - 8

Analog Beispiel 1 werden 90 Gew.-Tle eines Polyamids der rel. Viskosität von 4,2 mit 10 Gew.-Tln verschiedener olefinischer Copolymerisate, deren Zusammensetzung aus Tabelle 1 zu ersehen ist, gemischt und compoundiert.

Die dabei erhaltenen Polymerlegierungen sind ebenfalls in Tabelle 1 bezüglich Homogenität und Kerbschlagzähigkeit charakterisiert.

### Tabelle 1

| | | Zusammensetzung des olefinischen Copolymerisats | | | Fp(*) | Homogenität der Polymerlegierung | Kerbschlag-zähigkeit |
| Beispiel | Äthylen Gew.-Tle | Acrylamid Gew.-Tle | Äthylacrylat Gew.-Tle | t-Butylacrylat Gew.-Tle | °C | | kJ/m² |
|---|---|---|---|---|---|---|---|
| 5 | 95,5 | 2,0 | 2,5 | — | 118 | gut | 16,5 |
| 6 | 89,8 | 4,2 | 6,0 | — | 110 | gut | 17,3 |
| 7 | 89,0 | 8,0 | 3,0 | — | 130 | gut | 16,9 |
| 8 | 89,0 | 4,5 | — | 6,5 | 109 | gut | 19,5 |

(*) Der Erweichungsbereich liegt ca. ± 5 °C um den angegebenen Fp.

## Ansprüche

1. Schlagzähe Polymerlegierungen bestehend aus
    1) 70-99 Gew.-% eines Polyamids und
    2) 1-30 Gew.-% eines olefinischen Copolymerisats bestehend aus
        a) 65-98 Gew.-% eines $\alpha$-Olefins mit $C_2$-$C_{20}$
        b) 1-15 Gew.-% eines Amids einer $\alpha,\beta$-ungesättigten Carbonsäure mit $C_3$-$C_5$ und
        c) 1-20 Gew.-% eines $C_1$-$C_8$ Alkyl- oder Alkylenesters einer $\alpha,\beta$-ungesättigten Carbonsäure mit $C_3$-$C_5$,
wobei die Summe aus 1) und 2) bzw. a)-c) jeweils 100 Gew.-% beträgt.

2. Polymerlegierungen gemäß Anspruch 1 bestehend aus
    1) 80-90 Gew.-% eines Polyamids und
    2) 5-20 Gew.-% eines olefinischen Copolymerisats.

3. Polymerlegierungen gemäß Ansprüchen 1 und 2, bei denen die Komponente 2) aus
    a) 80-96 Gew.-% eines $\alpha$-Olefins mit $C_2$-$C_{20}$
    b) 2-8 Gew.-% eines Amids einer $\alpha,\beta$-ungesättigten Carbonsäure mit $C_3$-$C_5$ und
    c) 2-15 Gew.-% eines $C_1$-$C_8$-Alkyl- oder Alkenylesters einer $\alpha,\beta$-ungesättigten Carbonsäure mit $C_3$-$C_5$ besteht, wobei die Summe aus a)-c) jeweils 100 Gew.-% beträgt.

4. Polymerlegierungen gemäß Ansprüchen 1-3, enthaltend als olefinisches Copolymerisat ein Copolymerisat mit Ethylen als $\alpha$-Olefin, einem Amid und einem $C_1$-$C_8$-Alkylester einer $\alpha,\beta$-ungesättigten Säure mit $C_3$-$C_5$.

5. Polymerlegierungen gemäß Anspruch 4, enthaltend, als olefinisches Copolymerisat ein Copolymerisat aus Ethylen, Methacrylamid und tert.-Butylacrylamid.

6. Polymerlegierungen gemäß Ansprüchen 1-5, enthaltend ein Polyamid mit einer relativen Viskosität von mindestens 2,5.

7. Formkörper aus Polymerlegierungen gemäß Ansprüchen 1-6.

8. Transparente Folien gemäß Anspruch 7.

## Claims

1. Impact-resistant polymer blends consisting of
    1) 70-99 % by weight of a polyamide and
    2) 1-30 % by weight of an olefinic copolymer consisting of
        a) 65-98 % by weight of an $\alpha$-olefin with $C_2$-$C_{20}$
        b) 1-15 % by weight of an amide of an $\alpha,\beta$-unsaturated carboxylic acid with $C_3$-$C_5$ and
        c) 1-20 % by weight of a $C_1$-$C_8$ alkyl or alkylene ester of an $\alpha,\beta$-unsaturated carboxylic acid with $C_3$-$C_5$,
the sum of 1) and 2) and the sum of a)-c) being in each case 100 % weight.

2. Polymer blends according to claim 1 consisting of
    1) 80-90 % by weight of a polyamide and
    2) 5-20 % of an olefinic copolymer.

3. Polymer blends according to claims 1 and 2, in which the component 2) consists of
    a) 80-96 % by weight of an $\alpha$-olefin with $C_2$-$C_{20}$

b) 2-8 % by weight of an amide of an $\alpha,\beta$-unsaturated carboxylic acid with $C_3$-$C_5$ and

c) 2-15 % by weight of a $C_1$-$C_8$ alkyl or alkenyl ester of an $\alpha,\beta$-unsaturated carboxylic acid with $C_3$-$C_5$, the sum of a)-c) in each case being 100 % by weight.

4. Polymer blends according to claims 1 to 3, containing as olefinic copolymer a copolymer consisting of ethylene as the $\alpha$-olefin, an amide and a $C_1$-$C_8$ alkyl ester of an $\alpha,\beta$-unsaturated acid with $C_3$-$C_5$.

5. Polymer blends according to claim 4, containing as olefinic copolymer a copolymer of ethylene, methacrylamide and tert.-butylacrylamide.

6. Polymer blends according to claims 1 to 5, containing a polyamide having a relative viscosity of at least 2.5.

7. Moulded products made of polymer blends according to claims 1 to 6.

8. Transparent films according to claim 7.

**Revendications**

1. Alliages polymères résistants aux chocs consistant en :
   1) 70-99 % en poids d'un polyamide, et
   2) 1-30 % en poids d'un copolymère oléfinique consistant en :
      a) 65-98 % en poids d'une $\alpha$-oléfine en $C_2$-$C_{20}$,
      b) 1-15 % en poids d'un amide d'acide carboxylique $\alpha,\beta$-insaturé en $C_3$-$C_5$, et
      c) 1-20 % en poids d'un ester d'alkyle ou d'alcényle en $C_1$-$C_8$ d'un acide carboxylique $\alpha,\beta$-insaturé en $C_3$-$C_5$, la somme de 1) et 2) ou a)-c) étant chaque fois égale à 100 % en poids.

2. Alliages polymères selon la revendication 1, consistant en :
   1) 80-90 % en poids d'un polyamide, et
   2) 5-20 % en poids d'un copolymère oléfinique.

3. Alliages polymères selon les revendications 1 et 2, dans lesquels le composant 2) consiste en :
   a) 80-96 % en poids d'une $\alpha$-oléfine en $C_2$-$C_{20}$,
   b) 2-8 % en poids d'un amide d'un acide carboxylique $\alpha,\beta$-insaturé en $C_3$-$C_5$, et
   c) 2-15% en poids d'un ester d'alkyle ou d'alcényle en $C_1$-$C_8$ d'un acide carboxylique $\alpha,\beta$-insaturé en $C_3$-$C_5$, la somme de a)-c) étant chaque fois égale à 100 % en poids.

4. Alliages polymères selon les revendications 1-3, contenant comme copolymère oléfinique un copolymère d'éthylène comme $\alpha$-oléfine, d'un amide et d'un ester d'alkyle en $C_1$-$C_8$ d'un acide $\alpha,\beta$-insaturé en $C_3$-$C_5$.

5. Alliages polymères selon la revendication 4, contenant comme copolymère oléfinique un copolymère d'éthylène, de méthacrylamide et de tert-butylacrylamide.

6. Alliages polymères selon les revendications 1-5, contenant un polyamide ayant une viscosité relative d'au moins 2,5.

7. Pièces moulées en alliages polymères selon les revendications 1-6.

8. Feuilles transparentes selon la revendication 7.